# EUROPÄISCHE PATENTSCHRIFT

(11) **EP 1 308 349 B1**
(45) Veröffentlichungstag und Bekanntmachung des Hinweises auf die Patenterteilung: **01.03.2006**
(21) Anmeldenummer: 02019513.7
(22) Anmeldetag: 31.08.2002
(51) Int. Cl.: B60R 13/04

(54) **Befestigungsvorrichtung für eine Abdeckleiste**
Covering strip fastening device
Dispositif de fixation d'une moulure de recouvrement

(30) Priorität: 30.10.2001 DE 10153568
(43) Veröffentlichungstag der Anmeldung: 07.05.2003
(73) Patentinhaber: Dr.Ing. h.c.F. Porsche Aktiengesellschaft, 70435 Stuttgart (DE)
(72) Erfinder: Ranft, Detlev, 76337 Waldbronn-Reichenbach (DE)

(56) Entgegenhaltungen:
- DE-A- 3 736 029
- DE-A- 19 521 862
- DE-U- 29 602 223
- PATENT ABSTRACTS OF JAPAN vol. 1997, no. 12, 25. Dezember 1997 (1997-12-25) & JP 09 210027 A (TOGO SEISAKUSHO:KK), 12. August 1997 (1997-08-12)

## Beschreibung

Die Erfindung betrifft eine Befestigungsvorrichtung für eine Abdeckleiste eines Spaltes an einem Kraftfahrzeug mit einem in den Spalt einsetzbaren, die Abdeckleiste aufnehmenden mehrteiligen Haltekörper.

Aus der DE 195 21 862 A1 geht eine Befestigungsvorrichtung für eine Abdeckleiste eines Spaltes an einem Kraftfahrzeug hervor, wobei die Abdeckleiste mittels in den Spalt eingesetzter mehrteiliger Haltekörper in Lage gehalten ist Jeder mehrteilig ausgebildete Haltekörper umfaßt seitliche Spannteile, die mittels eines zwischen den Spannteilen vorgesehenen verschiebbaren Spreizelementes gegen Seitenwände des Spaltes verspannbar sind, um toleranzbedingte Breitenschwankungen des Spaltes auszugleichen.

Bei dieser Anordnung sind jedoch keine Vorkehrungen getroffen, um Rohbau- und Fertigungstoleranzen in Höhenrichtung der beiden an den Spalt angrenzenden Karosserieaußenhautabschnitte bzw. Neigungsschwankungen zu kompensieren. Insbesondere bei Spalten, die einerseits von einem Dachseitenholm und andererseits von einem verklebten starren oder verschiebbaren Glasdachabschnitt begrenzt werden, treten in der Praxis relativ hohe Toleranzen beider Bauteile in Höhenrichtung bzw. Neigungsschwankungen beider Bauteile auf.

Aus der JP 09 210 027 A ist eine Befestigungsvorrichtung bekannt, die dem Oberbegriff den unabhángigen Anspruch entspricht.

Aufgabe der Erfindung ist es, einen Haltekörper zur Aufnahme einer Abdeckleiste an einem Spalt eines Kraftfahrzeuges so weiterzuentwickeln, daß damit relativ hohe Rohbau- und Fertigungstoleranzen in Höhenrichtung bzw. Neigungsschwankungen der an den Spalt angrenzenden Karosserieaußenhautabschnitte ausgeglichen werden können, um stets einen optisch einwandfreien Übergang zwischen der langgestreckten Abdeckleiste und den angrenzenden Karosserieaußenhautabschnitten zu gewährleisten.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß mittels des erfindungsgemäßen Haltekörpers relativ hohe Rohbau- und Fertigungstoleranzen in Höhenrichtung bzw. Neigungsschwankungen beider angrenzender Bauteile ausgleichbar sind, so daß der Übergang zwischen der Abdeckleiste und den angrenzenden Karosserieaußenhautabschnitten wesentlich verbessert wird. Hierzu wird der vorzugsweise aus Kunststoff gefertigte Haltekörper in ein Unterteil und ein Oberteil unterteilt, die an einem gemeinsamen Längsrand über eine in Spalttängsrichtung verlaufende Drehachse gelenkig miteinander verbunden sind. Eine besonders einfache, kostengünstige Anordnung wird dadurch geschaffen, daß die gelenkige Verbindung durch ein angespritztes Filmgelenkscharnier gebildet wird.

Entfernt von der Drehachse ist das Oberteil des Haltekörpers gegenüber dem Unterteil über eine Einrichtung - in Querrichtung des Spaltes gesehen - stufenweise neigungseinstellbar ausgebildet. Dies wird in einfacher Weise dadurch erzielt, daß zwischen dem Oberteil und dem Unterteil zumindest eine gegenseitige Rastverzahnung vorgesehen ist. Vorzugsweise sind zwei mit Abstand zueinander angeordnete gegenseitige Rastverzahnungen zwischen Oberteil und Unterteil ausgebildet. Die eingestellte Lage des Oberteils relativ zum Unterteil ist durch einen eintreibbaren Sicherungskeil fixiert, der abgestellte federnde Stege des Unterteils nach außen gegen das Oberteil drückt. Der vormontierbare Sicherungskeil ist gegen Herausfallen gesichert. Die Befestigung des Haltekörpers am Aufbau erfolgt in einfacher Weise durch Kleben, Verschrauben, Klipsen oder dgl. an einem Aufbauflansch.

Ein Ausführungsbeispiel der Erfindung ist in der Zeichnung dargestellt und wird im folgenden näher beschrieben.
Es zeigt:
- Fig. 1: eine perspektivische Seitenansicht eines Kraftfahrzeuges mit einem Dachspalt und einer von Haltekörpern gehaltenen Abdeckleiste,

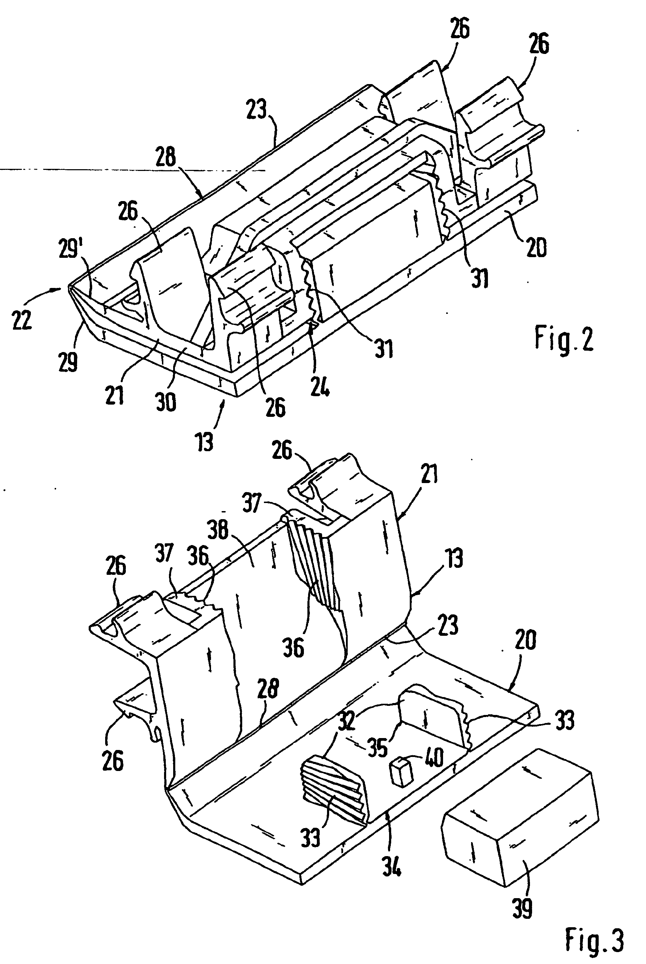

- Fig. 2: eine perspektivische Ansicht eines Haltekörpers für die Abdeckleiste in eingestellter Montagestellung,
- Fig. 3: eine perspektivische Ansicht des Haltekörpers in aufgeklappter Stellung,
- Fig. 4: einen Schnitt nach der Linie IV-IV der Fig. 1 in größerer Darstellung und
- Fig. 5: einen Schnitt nach der Linie V-V der Fig. 1 in größerer Darstellung.

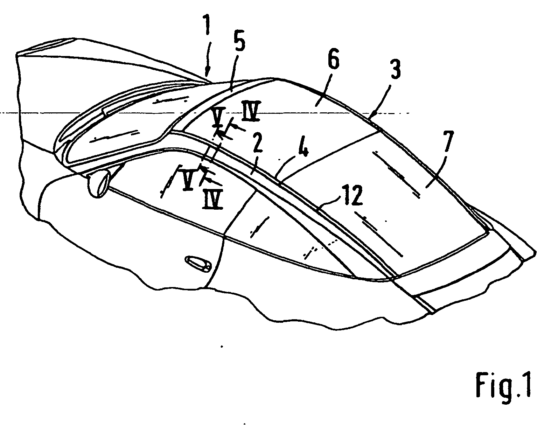

In Fig. 1 ist perspektivisch ein Teil eines Kraftfahrzeuges dargestellt, bei dem zwischen einem Dachseitenholm 2 und einem Dach 3 ein sich über die gesamte Dachlänge erstreckender Spalt 4 vorgesehen ist Das Dach 3 wird im Ausführungsbeispiel im vorderen, an den VVndschutrscheibenrahmen 5 anschließenden Bereich durch ein großflächiges verschiebbares Glasdach 6 gebildet, an das sich nach hinten hin ein starrer oder ein schwenkbarer Glasdachabschnitt 7 anschließt

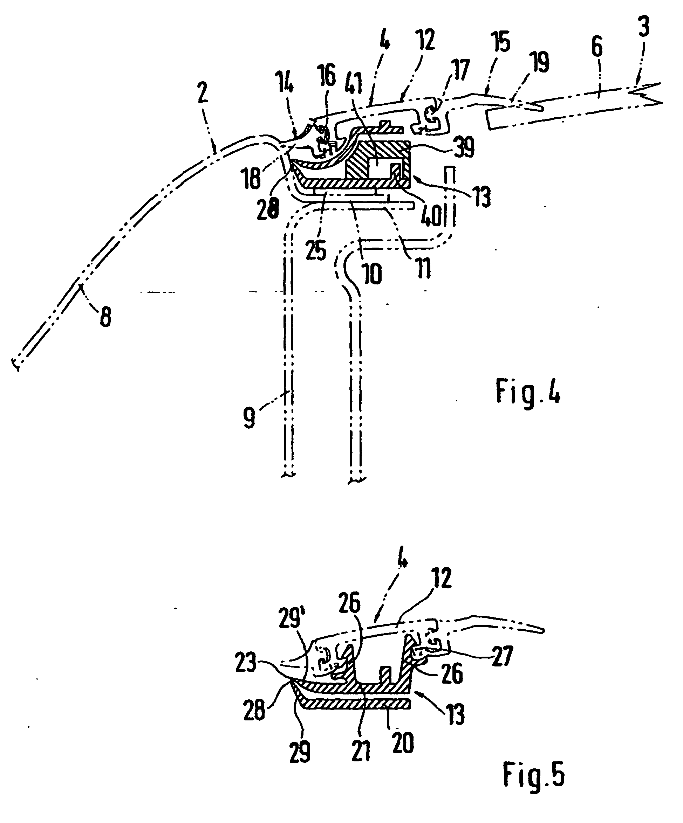

Jeder Dachseitenholm 2 setzt sich aus wenigstens zwei Blechpreßteilen 8, 9 zusammen, die an endseitigen abgewinkelten Befestigungstlanschen 10, 11 durch Schweißen miteinander verbunden sind. Wie aus den Fig. 4 und 5 weiter zu sehen ist, ist der Spalt 4 durch eine Abdeckleiste 12 verkleidet, die entlang ihrer Längserstreckung von mehreren beabstandet angeordneten Haltekörpern 13 aufgenommen ist

Die Abdeckleiste 12 ist an ihren beiden seitlichen Rändern mit aufgesteckten Dichtkedern 14, 15 versehen, wobei beide Dichtkeder 14, 15 jeweils einen Aufnahmeabschnitt 16,17 und eine Dichdippe 18, 19 aufweisen. Die Dichdippe 18 liegt dabei am Dachseitenholm 2 und die Dichtlippe 19 liegt am Dach 3 unter Vorspannung an. Damit über die gesamte Längserstreckung ein stilistisch sauberer Übergang zwischen der Abdeckleiste 12 und der angrenzenden Karosserieaußenhaut (Dachseitenholme 2, Dach 3) erzielt wird, ist vorgesehen, daß jeder Haltekörper 13 ein Unterteil 20 und ein Oberteil 21 umfaßt, die an einem gemeinsamen Längsrand 22 des Spaltes 4 über eine in Spaltlängsrichtung verlaufende Drehachse 23 gelenkig miteinander verbunden sind und daß das Oberteil 21 des Haltekörpers 13 über eine Einrichtung 24 - in Querrichtung des Spaltes 4 gesehen - neigungseinstellbar ausgebildet ist Der gemeinsame Längsrand 22 ist im Ausführungsbeispiel dem Dachseitenholm 2 zugekehrt

Jeder Haltekörper 13 ist vorzugsweise aus Kunststoff gefertigt. Die aufbauseitige Befestigung der Haltekörper 13 erfolgt im Ausführungsbeispiel durch Verkleben, wobei zwischen der Unterseite des Unterteils 20 und dem Befestigungsflansch 10 des Dachseitenholms 2 ein Klebekörper 25 angeordnet ist. Die Festlegung des Haftekörpers 13 kann jedoch auch durch Verschrauben, Klipsen oder dgl. erfolgen. Zur Halterung der Abdeckleiste 12 sind am Oberteil 21 des Haftekörpers 13 paarweise angeordnete, nach oben hin ragende federnde Schnapphaken 26 ausgebildet, die mit hinterschnittenen Randbereichen 27 der Abdeckleiste 12 verrastend zusammenwirken (Fig. 5).

Erfindungsgemäß sind das Unterteil 20 und das Oberteil 21 des Haltekörpers 13 über ein Filmgelenkscharnier 28 miteinander verbunden, das die Drehachse 23 bildet. Im Bereich des Filmgelenkscharniers 28 weisen sowohl das Unterteil 20 als auch das Oberteil 21 eine randseitige, nach oben gerichtete Abstellung 29, 29' auf. Die Drehachse 23 liegt geringfügig höher als die obere Begrenzungsfläche 30 des Oberteils 21. Das Filmgelenkscharnier 28 erstreckt sich vorzugsweise über die gesamte Länge der längeren Seite des in der Draufsicht gesehen etwa rechteckförmigen Haltekörpers 13.

Die stufenförmige, neigungseinstellbare Einrichtung 24 wird durch zumindest eine gegenseitige Rastverzahnung 31 von Oberteil 21 und Unterteil 20 gebildet, wobei die Rastverzahnung 31 entfernt von der Drehachse 23 des Filmgelenkscharniers 28 angeordnet ist. Im Ausführungsbeispiel sind am Oberteil 21 und am Unterteil 20 des Haltekörpers 13 jeweils zwei miteinander zusammenwirkende, beabstandet angeordnete Rastverzahnungen 31 vorgesehen. Hierzu sind am Unterteil 20 zwei mit Abstand zueinander verlaufende nach oben hin ragende federnde Stege 32 ausgebildet, die an ihrer Außenseite mit einer sternförmig angeordneten Außenverzahnung 33 versehen sind. Die beiden Stege 32 verlaufen - in Draufsicht gesehen - leicht keilförmig zueinander, das heißt, ihr Abstand zueinander ist am Längsrand 34 des Unterteils 20 größer als an ihren innenliegenden Enden 35.

Die federnden Stege 32 sind annähernd rechtwinkelig zur Längserstreckung des Filmgelenkscharniers 28 ausgerichtet. Jede Außenverzahnung 33 wirkt mit einer korrespondierend ausgebildeten Innenverzahnung 36 des Oberteils 21 zusammen.

Die Innenverzahnungen 36 sind an seitlichen Wandabschnitten 37 einer dachförmigen nach oben gerichteten Ausprägung 38 des Oberteils 21 vorgesehen.

Zur Fixierung des Oberteils 21 in der gewünschten eingestellten Position ist in das Unterteil 20 in den Freiraum zwischen den beiden federnden Stegen 32 vom Längsrand 34 her ein Sicherungskeil 39 einsetzbar. Der Sicherungskeil 39 ist gegen Herausfallen gesichert. Hierzu ist am Unterteil 20 zwischen den federnden Stegen 32 örtlich eine nach oben ragende quaderförmige Anformung 40 ausgebildet, die bei eingesetztem Sicherungskeil 39 mit einer länglichen Aussparung 41 am Sicherungskeil 39 zusammenwirkt.

## Patentansprüche

1. Befestigungsvorrichtung für eine Abdeckleiste eines Spaltes an einem Kraftfahrzeug mit einem in den Spalt einsetzbaren, die Abdeckleiste aufnehmenden mehrteiligen Haltekörper, wobei der Haltekörper (13) ein Unterteil (20) und ein Oberteil (21) umfaßt, die an einem gemeinsamen Längsrand (22) über eine in Spaldängsrichtung verlaufende Drehachse (23) gelenkig miteinander verbunden sind und wobei das Oberteil (21) des Haltekörpers (13) gegenüber dem Unterteil (20) über eine Einrichtung (24) - in Querrichtung des Spaltes (10) - neigungseinstellbar ausgebildet ist, **dadurch gekennzeichnet, daß** am neigungseinstellbar ausgebildeten Oberteil (21) außerhalb der dachförmigen Ausprägung (38) paarweise angeordnete nach oben ragende Schnapphaken (26) ausgebildet sind, an denen die darüberliegende Abdeckleiste (12) festlegbar ist.

2. Befestigungsvorrichtung nach Anspruch 1, **dadurch gekennzeichnet, daß** das Unterteil (20) mit dem Oberteil (21) des Haltekörpers (13) über ein Filmgelenkscharnier (28) verbunden ist.

3. Befestigungsvorrichtung nach Anspruch 1, **dadurch gekennzeichnet, daß** die Einrichtung (24) durch zumindest eine gegenseitige Rastverzahnung (31) von Oberteil (21) und Unterteil (20) gebildet wird, wobei die Rastverzahnung (31) entfernt von der Drehachse (23) des Filmgelenkscharniers (28) angeordnet ist.

4. Befestigungsvorrichtung nach Anspruch 3, **dadurch gekennzeichnet, daß** am Unterteil (20) und am Oberteil (21) des Haltekörpers (13) jeweils zwei Rastverzahnungen (31) vorgesehen sind, die miteinander zusammenwirken.

5. Befestigungsvorrichtung nach einem der vorangegangenen Ansprüche, **dadurch gekennzeichnet, daß** am Unterteil (20) zumindest ein nach oben ragender, an seiner Außenseite mit einer Außenverzahnung (33) versehener federnder Steg (32) ausgebildet ist, der annähernd rechtwinkelig zur Längserstreckung des Filmgelenkscharniers (28) ausgerichtet ist, wobei die Außenverzahnung (33) mit einer korrespondierend ausgebildeten Innenverzahnung (36) des Oberteils (21) zusammenwirkt.

6. Befestigungsvorrichtung nach Anspruch 5, **dadurch gekennzeichnet, daß** die zumindest eine Innenverzahnung (36) an einem seitlichen Wandabschnitt (37) einer dachförmigen, nach oben gerichteten Ausprägung (38) des Oberteils (21) vorgesehen ist.

7. Befestigungsvorrichtung nach einem der vorangegangenen Ansprüche, **dadurch gekennzeichnet, daß** am plattenförmigen Unterteil (20) des Haltekörpers (13) zwei beabstandet angeordnete, in der Draufsicht gesehen keilförmig zueinander verlaufende federnde Stege (32) mit Außenverzahnungen (33) vorgesehen sind.

8. Befestigungsvorrichtung nach einem der vorangegangenen Ansprüche, **dadurch gekennzeichnet, daß** in das Unterteil (20) in den Freiraum zwischen den beiden federnden Stegen (32) ein Sicherungskeil (39) einsetzbar ist, der das Oberteil (21) in der gewünschten eingestellten Position festhält.

9. Befestigungsvorrichtung nach einem der vorangegangenen Ansprüche, **dadurch gekennzeichnet, daß** der Sicherungskeil (39) gegen Herausfallen gesichert ist.

10. Befestigungsvorrichtung nach einem der vorangegangenen Ansprüche, **dadurch gekennzeichnet, daß** das Unterteil (20) des Haltekörpers (13) durch Kleben, Verschrauben, Klipsen oder dgl. am feststehenden Aufbau des Kraftfahrzeugs (1) befestigt ist.

## Claims

1. A fixing device for a cover strip for a gap in a motor vehicle, comprising a multipart holding member which receives the cover strip and is insertable into the gap, wherein the holding member (13) comprises a lower part (20) and an upper part (21) which are connected to one another in an articulated manner at a common longitudinal edge (22) via a rotation axis (23) extending in the longitudinal direction of the gap, and wherein the upper part (21) of the holding member (13) is formed so as to be angularly adjustable relative to the lower part (20) - in the transverse direction of the gap (10) - by means of a device (24), **characterised in that** upwardly projecting snap hooks (26), which are arranged in pairs and to which the overlying covering strip (12) is fixable, are formed on the angularly adjustable upper part (21) outside a roof-shaped impression (38).

2. A fixing device according to claim 1, **characterised in that** the lower part (20) is connected to the upper part (21) of the holding member (13) by a film hinge (28).

3. A fixing device according to claim 1, **characterised in that** the device (24) is formed by at least one set of mutually engaging teeth (31) between the upper part (21) and the lower part (20), wherein the engaging teeth (31) are arranged remotely from the rotation axis (23) of the film hinge (28).

4. A fixing device according to claim 3, **characterised in that** two sets of engaging teeth (31), which co-operate with one another, are provided on the lower part (20) and the upper part (21) of the holding member (13).

5. A fixing device according to any one of the preceding claims, **characterised in that** at least one upwardly projecting, resilient web (32), which is provided with external teeth (33) on its outer surface, is formed on the lower part (20) and is orientated substantially at right angles to the longitudinal extent of the film hinge (28), wherein the external teeth (33) co-operate with correspondingly formed internal teeth (36) on the upper part (21).

6. A fixing device according to claim 5, **characterised in that** the at least one set of internal teeth (36) is provided on a lateral wall portion (37) of a roof-shaped, upwardly extending impression (38) in the upper part (21).

7. A fixing device according to any one of the preceding claims, **characterised in that** two spaced resilient webs (32), which extend towards one another in the form of a wedge when seen in plan view and which have external teeth (33), are provided on the plate-shaped lower part (20) of the holding member (13).

8. A fixing device according to any one of the preceding claims, **characterised in that** a securing wedge (39) is insertable into the lower part (20) into the free space between the two resilient webs (32) and secures the upper part (21) in the desired adjustment position.

9. A fixing device according to any one of the preceding claims, **characterised in that** the securing wedge (39) is secured against falling out.

10. A fixing device according to any one of the preceding claims, **characterised in that** the lower part (20) of the holding member (13) is fastened by glue, screws, clips or the like to the fixed body of the motor vehicle (1).

## Revendications

1. Dispositif de fixation pour une baguette de recouvrement d'une fente sur un véhicule automobile, comportant un corps de fixation en plusieurs parties, recevant la baguette de recouvrement et pouvant être inséré dans la fente, le corps de fixation (13) étant formé par une partie inférieure (20) et une partie supérieure (21) qui, sur un bord longitudinal (22) commun, sont assemblées l'une à l'autre de manière articulée par l'intermédiaire d'un axe de rotation (23) orienté dans le sens longitudinal de la fente, et la partie supérieure (21) du corps de fixation (13) étant conçue réglable en inclinaison - dans le sens transversal de la fente (10) - par rapport à la partie inférieure (20) par l'intermédiaire d'un dispositif (24), **caractérisé en ce que** sur la partie supérieure (21), réglable en inclinaison, sont réalisés des crochets d'encliquetage (26) en saillie vers le haut, qui sont disposés par paires en dehors du relief (38) en forme de toit et sur lesquels peut être fixée la baguette de recouvrement (12) posée sur le dessus.

2. Dispositif de fixation selon la revendication 1, **caractérisé en ce que** la partie inférieure (20) est assemblée à la partie supérieure (21) du corps de fixation (13) par l'intermédiaire d'une charnière articulée de type film (28).

3. Dispositif de fixation selon la revendication 1, **caractérisé en ce que** le dispositif (24) est formé par au moins une denture d'immobilisation (31) réciproque de la partie supérieure (21) et de la partie inférieure (20), la denture d'immobilisation (31) étant agencée à distance de l'axe de rotation (23) de la charnière articulée (28).

4. Dispositif de fixation selon la revendication 3, **caractérisé en ce qu'**il est prévu deux dentures d'immobilisation (31), coopérant entre elles, respectivement sur la partie inférieure (20) et la partie supérieure (21) du corps de fixation (13).

5. Dispositif de fixation selon l'une quelconque des revendications précédentes, **caractérisé en ce que** sur la partie inférieure (20) est réalisée au moins une languette (32) flexible en saillie vers le haut, dont la face extérieure est munie d'une denture extérieure (33) et qui est orientée à peu près perpendiculairement à la dimension longitudinale de la charnière articulée (28), la denture extérieure (33) coopérant avec une denture intérieure (36), conçue de manière correspondante sur la partie supérieure (21).

6. Dispositif de fixation selon la revendication 5, **caractérisé en ce que** ladite au moins une denture intérieure (36) est prévue sur une partie de paroi latérale (37) d'un relief (38) de la partie supérieure (21), orienté vers le haut en forme de toit.

7. Dispositif de fixation selon l'une quelconque des revendications précédentes, **caractérisé en ce que**, sur la partie inférieure (20) en forme de plateau du corps de fixation (13), il est prévu deux languettes (32) flexibles, qui sont disposées à distance l'une de l'autre en convergeant en forme de cale, par référence à une vue de dessus, et qui sont munies de dentures extérieures (33).

8. Dispositif de fixation selon l'une quelconque des revendications précédentes, **caractérisé en ce qu'**une cale de blocage (39), qui maintient la partie supérieure (21) dans la position définie souhaitée, peut être insérée dans la partie inférieure (20) dans l'espace libre entre les deux languettes (32) flexibles.

9. Dispositif de fixation selon l'une quelconque des revendications précédentes, **caractérisé en ce que** la cale de blocage (39) est maintenue de manière à ne pas tomber hors du dispositif.

10. Dispositif de fixation selon l'une quelconque des revendications précédentes, **caractérisé en ce que** la partie inférieure (20) du corps de fixation (13) est fixée sur la carrosserie fixe du véhicule automobile (1) par collage, par des vis, des clips ou tout autre élément similaire.
